Europäisches Patentamt

European Patent Office

Office européen des brevets

(11) Publication number: **0 198 944**
**B1**

(12) EUROPEAN PATENT SPECIFICATION

(45) Date of publication of patent specification: 21.03.90

(21) Application number: 85105159.9

(22) Date of filing: 26.04.85

(51) Int. Cl.⁵: **G 10 K 11/30, G 01 H 3/12,
G 01 N 29/04, G 01 S 15/89**

(54) Scanning acoustic microscope.

(43) Date of publication of application:
**29.10.86 Bulletin 86/44**

(45) Publication of the grant of the patent:
**21.03.90 Bulletin 90/12**

(84) Designated Contracting States:
**CH DE FR GB LI**

(56) References cited:
**GB-A- 732 083
GB-A-2 110 052
US-A-3 754 208
US-A-3 934 460
US-A-4 028 933**

**NAVY TECHNICAL DISCLOSURE BULLETIN, vol.
3, no. 2, February 1978, pages 47-53, Arlington,
US; M. CHODOROW et al.: "Alternative
geometries for scanning acoustic microscopes"**

(73) Proprietor: **International Business Machines
Corporation
Old Orchard Road
Armonk, N.Y. 10504 (US)**

(72) Inventor: **Stoll, Erich Paul, Dr.
Weidelacherstrasse 1
CH-8143 Stallikon (CH)**

(74) Representative: **Rudack, Günter O., Dipl.-Ing.
IBM Corporation Säumerstrasse 4
CH-8803 Rüschlikon (CH)**

Courier Press, Leamington Spa, England.

## Description

This invention relates to scanning acoustic microscopes in which a beam of acoustic energy s use to obtain information on the surface region of a specimen, down to a certain penetration depth, and with a resolution comparable to, or better than, the resolution of optical microscopes.

Scanning acoustic microscopes are known in the art. After an initial effort disclosed by S. Sokolov, An Ultrasonic Microscope, Dokl. Akad. Nauk. 64 (1949) 333-335, the first scanning acoustic microscope was demonstrated by R. A. Lemons and C. F. Quate, Acoustic Microscopy by Mechanical Scanning, Appl. Phys. Letters 24 (1974) 163—164. The microscope using sound rather than light has two main advantages: Firstly, the images are formed from information obtained at the interaction of sound waves with the specimen and, thus, contrast in acoustically generated images relates to the mechanical properties of the specimen. Actually, specimens which appear uniform or opaque under the optical microscope can show high contrast when inspected with the acoustic microscope. Secondly, the spatial resolution of an imaging system depends on the wavelength of the illuminating radiation. In an optical microscope the greatest resolution is about 0,3 µm in green light. Since the speed of sound wave propagation is very much less than the speed of light, and hence only modest acoustic frequencies are necessary to obtain comparable acoustic wavelengths, the acoustic microscope has potential for five to ten times better resolution than the optical limit.

The principles and the design of conventional acoustic microscopes have been extensively discussed in the literature, e.g. in V. Jipson and C. F. Quate, Acoustic Microscopy at Optical Wavelengths, Appl. Phys. Letters 32 (1978) 789—791; J. E. Heiserman, Cryogenic Acoustic Microscopy: The Search for Ultrahigh Resolution Using Cryogenic Liquids, Physica 109 & 110B (1982) 1978—1989; and D.A. Sinclair, I.R. Smith and H. K. Wickramasinghe, Recent Developments in Scanning Acoustic Microscopy, The Radio and Electronic Engineer 52 (1982) No. 10, pp. 479-493.

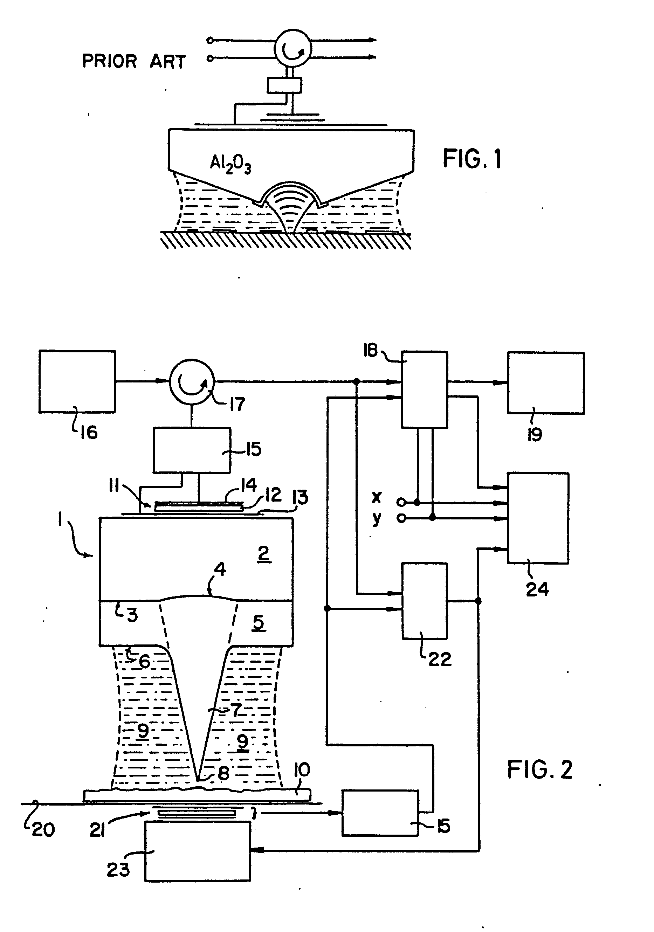

Briefly, in a conventional scanning acoustic microscope, the specimen is translated point-by-point and line-by-line in a raster pattern past a focused diffraction-limited acoustic beam. The beam is generated by a piezoelectric transducer attached to the rear surface of a sapphire disk and centered on the axis of a single surface spherical lens ground into the sapphire surface opposite the transducer. The specimen is, of course, translated in the focal plane of the lens which is, by the way, in most acoustic microscopes coated with an antireflection glass layer of a one-quarter wavelength thickness. Lens and specimen are immersed in a body of liquid, such as water. The acoustic beam travelling down the sapphire is focused onto the specimen where it gets reflected and detected by the piezoelectric transducer. An electronic circulator serves to discriminate the reflected signal from the input signal. The output signal is used to modulate the brightness of a cathode ray tube display whose x and y axes are synchronized with the scanning of the specimen. In order to produce acoustic wavelengths in the coupling liquid of less than a micrometer, the transducer is driven at frequencies in the gigahertz range. Fig. 1, published in several of the references cited above, shows the basic components of a prior art scanning acoustic microscope.

As already pointed out by P. Sulewski, D. J. Bishop and R. C. Dynes, A Description of the Bell Laboratories Scanned Acoustic Microscope, The Bell Syst. Tech. Journ. 61 (1982) No. 9, p. 2174f, the theoretical resolution of the acoustic microscope is proportional to the wavelength, thus, increasing the frequency should improve the resolution. However, for water and many other liquids, the acoustic attenuation is proportional to the second power of the frequency so that increasing the frequency only dramatically increases the power losses within the coupling liquid. In the interest of preserving the signal-to-noise ratio at an acceptable level, frequencies in the range of 3 GHz are presently considered optimal.

The resolving power of the conventional acoustic microscopes is also limited by the problems related to the acoustic beam diameter, in other words, to the diameter of the lens used. The smallest lens diameter found reported in the literature is 20 µm ( Sinclair et al., op. cit., p. 492), the resolution achievable with this lens is reported to be 220 nm at 1 GHz, with argon gas at 40 bar used as the coupling medium.

Obviously, better resolution than achievable with optical microscopes is not possible with conventional acoustic microscopes unless monatomic gas, like argon, is used at high pressure, or a cryogenic liquid, such as liquid helium, replaces the water as the coupling medium (Heiserman, op. cit.). These ambient conditions, while improving the resolution, restrict the applicability of the acoustic microscope since only a limited range of specimens is suited for such environments.

US-A-4-3,934,460 teaches the use of a buffer rod screwed to and extending from an arrangement of liquid-filled lenses towards a workpiece, the buffer rod having a spheroid-shaped or flat apex so that the acoustic beam is either collimated into a parallel beam by the spheroid or is focused at a point falling beyond the apex of the buffer rod.

US-A-4,028,933 shows a lens arrangement with lenses formed at the interface between two solids of different acoustic characteristics. The acoustic beam exits from a plane surface of one of the solids with the focal point falling in a fluid medium through which the object to be investigated is moved.

It is an object of the present invention to propose a new scanning acoustic microscope which without imposing difficult environmental conditions on the specimen permits a resolution on the order of 10 nm at an acceptable signal-to-noise ratio.

Accordingly, the present invention proposes a scanning acoustic microscope comprising an acoustic lens formed in a solid body interfacing with a coupling medium in which a specimen to be inspected is immersed, at least one transducer for generating/detecting sound waves in said solid body, and means for raster-scanning the focal point of said lens across the specimen, wherein said solid body is composed of a first section of a material having a first velocity of sound, and a second section of a material having a second velocity of sound lower than said first velocity of sound, and wherein said transducer is fixed on the free surface of said first section of the solid body, and wherein said lens is formed at the interface between said first and second sections of the solid body, with the characteristics that the second section of said solid body is provided with a sharply pointed tip formed at the surface of said second section and pointing away from said lens, and having its longitudinal axis centered with the axis of said lens, that said tip is sharpened to an apex having a radius of approximately 10 nanometers, that said tip is immersed in said coupling medium, and that the shape of said lens, the thickness of said second section and the length of said tip are chosen such that the focal point of said lens falls into the apex of said tip.

Details of an embodiment of the invention will hereafter be described by way of example with reference to the attached drawings in which

Fig. 1 shows a conventional scanning acoustic microscope;

Fig. 2 shows a scanning acoustic microscope in accordance with the invention.

As already mentioned, Fig. 1 shows schematically a scanning acoustic microscope as known from the prior art. It is designed to use the sound wave reflected by the specimen to form an image on a display screen. Under certain conditions it is possible to provide a second transducer underneath the specimen for detecting the sound energy passing the specimen, thus investigating it in a transmission mode.

The basic limitations inherent in the conventional acoustic microscope, viz. the size of the beam diameter and the velocity ratio of the sound waves in the solid lens structure and the coupling medium, are circumvented with the novel design as schematically shown in Fig. 2.

The lens body 1 consists of a first section 2 of a solid material having a relatively high velocity of sound, such as the usual sapphire. Ground into the lower surface 3 of the first section 2 is a single-surface lens 4 having a radius between 50 μm and 600 μm. Attached to the lower surface 3 is a second section 5 of a solid material having a velocity of sound lower than the material of section 2. Section 5 is shaped so as to jointlessly match the contour of section 2 including lens 4, i.e. there is no gap between sections 2 and 5 at the location of lens 4.

At the surface 6 of section 5 facing away from lens 4 there is provided a sharply pointed tip 7 which has its longitudinal axis centered with the axis of lens 4. The shape of lens 4, the thickness of section 5 and the length of tip 7 are designed such that the focus of lens 4 falls into the apex 8 of tip 7. The radius of the tip at its apex 8 should be on the order of 10 nm.

On top of lens body 1 there is provided a piezoelectric transducer 11 which consists of a sputtered film 12 of zinc oxide between two films 13 and 14 of gold. Via an electrical matching network 15 the transducer is connected to a microwave generator 16. Transducers of this type are used extensively in a variety of microwave acoustic applications to convert electrical pulses, even at frequencies exceeding 10 Ghz, to acoustic plane waves that, in the arrangement of Fig. 2, travel through the sapphire crystal 2 to the spherical lens 4 and on through the section 5 material into tip 7. The transducer 11 is also used to detect the acoustic wave reflected by the specimen and travelling back through tip 7 and sections 5 and 2 of lens body 1. The transducer then reconverts the acoustic wave into a microwave. A circulator 17 is required for directing the incoming microwave to the transducer and for discriminating the output microwave for display purposes. A scan converter 18 uses the x and y positioning information together with the rectified output pulse of transducer 11 to construct a video picture on the screen of a video display unit 19.

If the acoustic microscope is to be operated in the transmission mode, the acoustic radiation from tip 7 is passed through the specimen 10 which is supported on a thin polyester film 20, and collected by a second transducer 21 appropriately connected to scan converter 18. In this case, circulator 17 is not required.

As above mentioned, section 2 of lens body 1 consists of sapphire (A1$_2$0$_3$) with spherical lens 4 ground into its lower surface 3. To avoid undesired reflections at the interface between section 2 and adjacent section 5, the sound velocity in sapphire times the density of sapphire must be essentially equal to the sound velocity of the material of section 5 times its density. This condition is satisfied with good approximation if section 5 is made of one of the common metals, like steel, nickel, copper, silver, etc.

Of course, the manufacture of section 5 with its lens protrusion and the tip 7 is very delicate. One possibility would involve casting a low-melting alloy onto the lower surface 3 of the sapphire to avoid any gap between the materials in the sphere of lens 4. Besides a screw and nut arrangement to fix regions 2 and 5 together, they may be glued with a glue known from optics, like Canada balsam. A possible gap in the lens area could be filled with a droplet of mercury, but because of its smaller product of sound velocity and density, reflections may arise. ·

While in most prior art acoustic microscopes water is used as the coupling fluid because of its small absorption coefficient, the acoustic microscope of the present invention in contrast requires a coupling fluid with a large absorption coefficient in the frequency range of interest. Liquids such as benzene ($C_6H_6$) and carbon tetrachloride ($CCl_4$) may be used, but water will do as well.

Owing to the absorption characteristics of the coupling medium 9, the intensity of the reflected or transmitted sound waves strongly depends on the distance between tip 7 and the surface of specimen 10. If that distance is kept constant when the microscope is operated in the reflection mode, the assumed roughness of the surface of specimen 10 will result in deviations of the amplitude of the reflected signal from an initial, or standard, value. These deviations are supplied to a suitable feedback loop arrangement 22 for on-line adjustment of the tip/specimen distance through control of a z-drive module 23 to which the specimen is attached. The control signal from feedback unit 22 is also supplied to a plotter 24 together with the xy scanning signals. Since the specimen 10 is scanned in a matrix fashion, plotter 24 will draw an image of the topography of specimen 10 with a resolution of about 10 nm in the vertical direction. The resolution in xy direction is, of course, determined by the horizontal scanning means. It is known to use an integrated xyz drive module constructed of piezoelectric elements, which permits horizontal scanning steps in the nanometer range.

In operation in the reflection mode, an input pulse train is generated by microwave generator 16 at a frequency in the 3...10 GHz range. The pulsed wave is required to permit the circulator 17 the time needed for discriminating between input wave and reflected wave. The input wave passes through matching network 15 and excites transducer 11 which sends a plane sound wave into section 2 of lens body 1. This sound wave is focused by lens 4 into section 5, with the focal point falling into the apex 8 of tip 7.

Following is a numerical example of the dimensions of the lens body of the invention. With a lens diameter of about 0,25 mm and a radius of curvature of about 1 mm, the focal length of the lens will be around 0,8 mm. Of this, the length of the tip takes about 0, 5 mm and section 5 about 0,3 mm. Section 2 can have a thickness of 0,4 mm at a diameter of lens body 1 of 1 mm. After the lens has been ground into section 2 which consists of $Al_2O_3$ -, the section 5 metal is cast using the lens carrying surface 3 of section 2 as a mold to avoid gap formation in the lens area. Then tip 7 is formed by etching section 5. It should be possible to obtain a tip with a 1:3...4 diameter-to-length relationship and with a radius of about 10 mm at the apex 8.

Tip 7 is maintained at a constant distance of 10 nm above the surface of specimen 10. The diameter of the acoustic beam at the location of incidence will then also be in the 10 nanometer range, and so will be the resolution achievable with this instrument.

In order to obtain a reasonable signal-to-noise ratio, considering the thermal noise inherently being the most important source for disturbances, a primary acoustic power of 30 µW will be sufficient in both modes of operation.

When tip 7 is brought to within 10...15 nm distance from the surface of specimen 10, the reflected signal will have a certain amplitude which is stored as a reference. As the acoustic beam is scanned across the specimen, the measured amplitude will vary in accordance with the corrugation of the surface and in view of the structural features of the specimen which lie within a zone below its surface, the extent of this zone being determined by the penetration depth of the acoustic beam which, in turn, is a function of frequency and power of the incident beam as well as of the characteristics of the material of the specimen.

The transmission mode of operation is, of course, only applicable where the thickness of specimen 10 is smaller than the penetration depth of the acoustic beam. The specimen is supported on a thin plastic film. Transducer 21 arranged on the rear side of specimen 10 detects the acoustic energy passing through specimen 10. As in the reflection mode, the amplitude of the output signal for each scanning point is used together with the scanning coordinate information to generate an image of the specimen. The output signal is inherently ambiguous: It contains information on the thickness of the specimen convolved with information on the material and structure of the specimen. It is useful to have the output signals of both transducers, viz. transducer 11 for the reflection mode and transducer 21 for the transmission mode, processed by a suitable computer to obtain a consolidated image on the topography and on the internal structure of the specimen.

**Claims**

1. Scanning acoustic microscope comprising an acoustic lens (4) formed in a solid body (1) interfacing with a coupling medium (9) in which a specimen (10) to be inspected is immersed, at least one transducer (11) for generating/detecting sound waves in said solid body (1), and means for raster-scanning the focal point of said lens (4) across the specimen (10), wherein said solid body (8) is composed of a first section (2) of a material having a first velocity of sound, and a second section (5) of a material having a second velocity of sound lower than said first velocity of sound, and wherein said transducer (11) is fixed on the free surface of said first section (2) of the solid body (1), and wherein said lens (4) is formed at the interface (3) between said first and second sections (2, 5) of the solid body (1), characterized in that the second section (5) of said solid body (1) is provided with a sharply pointed tip (7) formed at the surface (6) of said second section (5) and pointing away from said lens (4), and having its longitudinal axis centered with the axis of said lens (4), that said tip (7) is sharpened to an apex (6) having a radius of approximately 10 nanometers, that said tip (7) is immersed in said coupling medium (9), and that the shape of said lens (4), the thickness of said second section (5) and the length of said tip are chosen such that the focal point of said lens (4) falls into the apex (8) of said tip (7).

2. Microscope in accordance with claim 1, characterized in that a first transducer (11) is attached to the free surface of the first section (2) of said solid body (1), and that a second transducer (21) is placed on the remote side of the specimen (10).

3. Microscope in accordance with claim 1, characterized in that the materials of said sections (2, 5) are chosen such that their respective acoustic impedances match in that the product of the sound velocity and density of the material of the first section (2) is at least approximately equal to the product of sound velocity and density of the material of the second section (5).

4. Microscope in accordance with claim 1, characterized in that the lens (4) at the interface (3) between the sections (2, 5) making up said solid body (1) extends into said first section (2) and has a focal length on the order of 1 mm with the focal point falling into the apex (8) of said tip (7) extending from said second section (5).

5. Microscope in accordance with claim 1, characterized in that said solid body (1) has a diameter of about 1 mm, said lens (4) has a diameter of between 50 µm and 600 µm, and that the thicknesses of said sections (2, 5) of the solid body (1) have approximately a 2:1 relationship.

6. Microscope in accordance with claim 1, characterized in that the relationship of the greatest diameter of said tip (7) to its length is approximately 1:3...4.

7. Microscope in accordance with claim 1, characterized in that said point (7) and said specimen (10) are immersed in a coupling medium (9) having a relatively high absorption coefficient in the frequency range in which said transducer (11, 21) is operated.

8. Microscope in accordance with claim 7, characterized in that said coupling medium (9) is chosen from the group comprising water, carbon tetrachloride and benzene.

9. Microscope in accordance with claim 3, characterized in that the first section (2) of the solid body (1) consists of sapphire ($Al_2O_3$) and that the second section (5) consists of metal.

**Patentansprüche**

1. Abtastendes Ultraschallmikroskop mit einer akustischen Linse (4), die in einem festen Körper (1) gebildet ist, welcher mit einem Koppelmedium (9) in Wirkungsverbindung steht, in das eine zu untersuchende Probe (10) eingetaucht ist, mit wenigstens einem Wandler (11) für das Erzeugen/ Empfangen von akustischen Wellen in dem genannten festen Körper (1), und mit Mitteln für das Führen des Brennpunktes der Linse (4) in einem Raster über die Probe (10), wobei der genannte feste Körper (1) aus einer ersten Sektion (2) eines eine erste Schallgeschwindigkeit aufweisenden Materials besteht und aus einer zweiten Sektion (5) mit einem Material, welches eine zweite Schallgeschwindigkeit aufweist, die niedriger ist als die genannte erste Schallgeschwindigkeit, und wobei der genannte Wandler (11) an der freien Oberfläche der genannten ersten Sektion (2) des festen Körpers (1) befestigt ist, und wobei die genannte Linse (4) am Übergang (3) zwischen den beiden Sektionen (2, 5) des festen Körpers gebildet ist, dadurch gekennzeichnet, daß die zweite Sektion (5) des festen Körpers (1) eine scharfe Spitze (7) an der Oberfläche (6) dieser zweiten Sektion (5) aufweist, die von der Linse (4) hinweg zeigt und deren Längsachse mit der Achse der genannten Linse (4) zentriert ist, daß die genannte Spitze (7) an ihrem Apex (8) zu einem Radius von angenähert 10 nm angespitzt ist, daß die Spitze (7) in das genannte Koppelmedium (9) eingetaucht ist, und daß die Form der Linse (4), die Dicke der genannten zweiten Sektion (5) und die Länge der Spitze so gewählt sind, daß der Brennpunkt der Linse (4) in den Apex (8) der genannten Spitze (7) fällt.

2. Mikroskop gemäß Anspruch 1, dadurch gekennzeichnet, daß ein erster Wandler (11) an der freien Oberfläche der ersten Sektion (2) des festen Körpers (1) befestigt ist, und daß ein zweiter Wandler (21) auf der abgewandten Seite der probe (10) angeordnet ist.

3. Mikroskop gemäß Anspruch 1, dadurch gekennzeichnet, daß die Materialien der genannten Sektionen (2, 5) so gewählt sind, daß ihre akustischen Impedanzen derart aufeinander abgestimmt sind, daß das Produkt aus Schallgeschwindigkeit und Dichte des Materials der ersten Sektion (2) wenigstens angenähert gleich ist dem Produkt aus Schallgeschwindigkeit und Dichte des Materials der zweiten Sektion (5).

4. Mikroskop gemäß Anspruch 1, dadurch gekennzeichnet, daß die Linse (4) am Übergang zwischen den den festen Körper (1) bildenden Sektionen (2, 5) sich in die genannte erste Sektion (2) hinein erstreckt und eine Brennweite in der Größenordnung von 1mm aufweist, wobei der Brennpunkt in den Apex (8) der von der zweiten Sektion (5) sich erstreckenden Spitze (7) fällt.

5. Mikroskop gemäß Anspruch 1, dadurch gekennzeichnet, daß der genannte feste Körper (1) einen Durchmesser von etwa 1mm hat, daß die Linse (4) einen Durchmesser von zwischen 50 µm und 600 µm hat, und daß die Dicken der genannten Sektionen (2, 5) des festen Körpers (1) in einem Verhältnis von angenähert 2:1 stehen.

6. Mikroskop gemäß Anspruch 1, dadurch gekennzeichnet, daß das Verhältnis des größten Durchmessers der genannten Spitze (7) zu ihrer Länge 1:3...4 ist.

7. Mikroskop gemäß Anspruch 1, dadurch gekennzeichnet, daß die genannte Spitze (7) und die genannte Probe (10) in ein Koppelmedium (9) eingetaucht sind, welches in dem Frequenzbereich, in dem der Wandler (11, 21) betrieben wird, einen relativ hohen Absorptionskoeffizienten aufweist.

8. Mikroskop gemäß Anspruch 1, dadurch gekennzeichnet, daß das Koppelmedium (9) aus einer Wasser, Tetrachlorkohlenstoff und Benzen umfassenden Gruppe ausgewählt ist.

9. Mikroskop gemäß Anspruch 3, dadurch gekennzeichnet, daß die erste Sektion (2) des festen Körpers (1) aus Saphir (Al$_2$O$_3$) und die zweite Sektion (5) aus Metall besteht.

**Revendications**

1. Microscope acoustique à balayage comportant une lentille acoustique (4) formée dans un corps solide (1) relié à un milieu de couplage (9), dans lequel un échantillon (10) devant être examiné est immergé, au moins un transducteur (11) servant à produire/détecter des ondes acoustiques dans ledit corps solide (1), et des moyens pour déplacer le foyer de ladite lentille (4) selon un balayage de trame en travers de l'échantillon (10), et dans lequel ledit corps solide (1) est constitué par une première section (2) formée d'un matériau, dans lequel le son possède une première vitesse, une seconde section (5) formée d'un matériau, dans lequel le son possède une seconde vitesse inférieure à ladite première vitesse, et dans lequel ledit transducteur (11) est fixé sur la surface libre de ladite première section (2) dudit corps solide (1), et ladite lentille (4) est formée au niveau de l'interface (3) entre lesdites première et seconde sections (2,5) du corps solide (1), caractérisé en ce que la seconde section (5) dudit corps solide (1) comporte une pointe très effilée (7) formée au niveau de la surface (6) de ladite seconde section (5) et tournée à l'opposé de ladite lentille (4), que ladite pointe (7) est effilée en direction d'un sommet (8) possédant un rayon égal à 10 nonomètres, que ladite pointe (7) est immergée dans ledit milieu de couplage (9), et que la forme de ladite lentille (4), l'épaisseur de ladite seconde section (5) et la longueur de ladite pointe sont choisie de manière que le foyer de ladite lentille (4) se situe au sommet (8) de ladite pointe (7).

2. Microscope selon la revendication 1, caractérisé en ce qu'un premier transducteur (11) est fixé à la surface libre de la première section (2) dudit corps solide (1), et qu'un second transducteur (21) est placé sur la face éloignée de l'échantillon (10).

3. Microscope selon la revendication 1, caractérisé en ce que les matériaux desdites sections (2,5) sont choisis de manière que leurs impédances acoustiques respectives soient adaptées afin que le produit de la vitesse du son par la densité du matériau de la première section (2) soit au moins approximativement égal au produit de la vitesse du son par la densité du matériau de la seconde section (5).

4. Microscope selon la revendication 1, caractérisé en ce que la lentille (4) située au niveau de l'interface (3) présente entre les sections (2,5), qui constituent ledit corps solide (1), s'étend à l'intérieur de ladite première section (2) et possède une distance focale de l'ordre de 1 mm, le foyer étant situé au niveau du sommet (8) de ladite pointe (7) s'étendant à partir de ladite seconde section (5).

5. Microscope selon la revendication 1, caractérisé en ce que ledit corps solide (1) possède un diamètre égal à environ 1 mm, ladite lentille (4) posséde un diamètre compris entre 50 μm et 600 μm et les épaisseurs desdites sections (2,5) dudit corps solide (1) sont entre elles approximativement dans le rapport 2:1.

6. Microscope selon la revendication 1, caractérisé en ce que le rapport du diamètre maximum de ladite pointe (7) à sa longueur est égal à environ I:3...4.

7. Microscope selon la revendication 1, caractérisé en ce que ladite pointe (7) et ledit échantillon (10) sont immergés dans un milieu de couplage (9) possédant un coefficient d'absorption relativement élevé dans la gamme des fréquences, dans laquelle ledit transducteur (11.21) fonctionne.

8. Microscope selon la revendication 7, caractérisé en ce que ledit milieu de couplage (9) est choisi dans le groupe incluant l'eau, le tétrachlorure de carbone et le benzène.

9. Microscope selon la revendication 3, caractérisé en ce que la première section (2) du corps solide (1) est constituée par du saphir (Al$_2$O$_3$) et que la seconde section (5) est constituée par un métal.

PRIOR ART

$Al_2O_3$

FIG. 1

FIG. 2